# FASCICULE DE BREVET EUROPEEN

(11) **EP 2 781 066 B1**
(45) Date de publication et mention de la délivrance du brevet: **30.06.2021**
(21) Numéro de dépôt: 12784619.4
(22) Date de dépôt: 16.11.2012
(51) Int. Cl.: H04L 12/24, G06F 8/60, G06F 8/65

(54) **DISPOSITIF DE RACCORDEMENT SELECTIF D'UN PREMIER EQUIPEMENT A UNE PLURALITE DE DEUXIEMES EQUIPEMENTS ET ENSEMBLE DE TRAITEMENT DE DONNEES COMPRENANT UN TEL DISPOSITIF**
VORRICHTUNG ZUR SELEKTIVEN VERBINDUNG EINES ERSTEN AUSRÜSTUNGSTEILS MIT MEHREREN ZWEITEN AUSRÜSTUNGSTEILEN UND DATENVERARBEITUNGSANLAGE MIT EINER SOLCHEN VORRICHTUNG
DEVICE FOR SELECTIVELY CONNECTING A FIRST ITEM OF EQUIPMENT TO A PLURALITY OF SECOND ITEMS OF EQUIPMENT AND DATA PROCESSING ASSEMBLY COMPRISING SUCH A DEVICE

(30) Priorité: 17.11.2011 FR 1160466
(43) Date de publication de la demande: 24.09.2014
(73) Titulaire: Safran Electronics & Defense, 75015 Paris (FR)
(72) Inventeur: LAROIS, Bruno, 75015 PARIS (FR); DELVILLE, Denis, 75015 PARIS (FR); COURTEILLE, Jean-Marie, 75015 PARIS (FR); VALETTE, Patrick, 75015 PARIS (FR)
(74) Mandataire: Lavialle, Bruno François Stéphane
(86) Numéro de dépôt international: PCT/EP2012/072852
(87) Numéro de publication internationale: WO 2013/072469

(56) Documents cités:
- EP-A1- 1 962 215
- US-A1- 2007 237 127
- US-A1- 2010 002 588
- US-A1- 2010 150 151

## Description

La présente invention concerne un dispositif de raccordement sélectif d'un premier équipement informatique à une pluralité de deuxièmes équipements informatiques. L'invention a également pour objet un ensemble de traitement de données comprenant au moins un tel dispositif.

De tels dispositifs de raccordement ont leur utilité dans de nombreux domaines et plus particulièrement dans le domaine aéronautique.

Ainsi, dans un aéronef, il est connu de relier une unité de chargement et déchargement de données (communément appelée « data loader ») aux calculateurs de l'aéronef pour charger des programmes ou des mises à jour dans les calculateurs ou pour en décharger des données. La norme ARINC 615 A prévoit l'utilisation du protocole Ethernet pour la liaison de l'unité de chargement et déchargement aux calculateurs.

Il est nécessaire d'interposer un dispositif de raccordement entre l'unité de chargement et déchargement et les calculateurs pour sélectivement relier l'unité de chargement et déchargement à chacun des calculateurs. Le dispositif de raccordement peut être un routeur Ethernet (communément appelé « switch ») assurant le routage des paquets de données entre l'unité de chargement et déchargement et les calculateurs. Dans un tel routeur, les ports du routeur sont reliés en permanence les uns aux autres et c'est le routeur qui détermine à quel port transférer les trames de données arrivant au routeur en fonction des adresses contenues dans les trames. Un tel routeur ne peut empêcher un transfert de données entre les calculateurs en raison par exemple de l'exécution d'un programme malveillant. En particulier, il est indispensable d'interdire le chargement d'un programme dans un des calculateurs lorsque l'aéronef est en vol.

Un dispositif de raccordement plus élaboré qu'il est possible d'utiliser est une interface de communication sécurisée comprenant un calculateur dédié programmé pour interdire un tel chargement de programme en vol. Une telle interface est cependant coûteuse. Des exemples de dispositifs de raccordement selon l'art antérieur sont connus en particulier des demandes de brevet US 2010/0002588 A1, US 2007/0237127 A1 et US 2010/0150151 A1.

Un but de l'invention est de fournir un moyen pour raccorder de manière simple, fiable et sécurisée un premier équipement informatique à une pluralité de deuxièmes équipements informatiques.

A cet effet, on prévoit, selon l'invention, un dispositif de raccordement sélectif d'au moins un premier équipement informatique à une pluralité de deuxièmes équipements informatiques, comprenant un premier port Ethernet de raccordement au premier équipement, des deuxièmes ports Ethernet de raccordement à chacun des deuxièmes équipements, les deuxièmes ports Ethernet étant isolés les uns des autres, un sélecteur agencé pour relier physiquement et de manière sélective le premier port Ethernet aux deuxièmes ports Ethernet, et une unité de commande du sélecteur. Ainsi, le dispositif de raccordement assure une commutation physique du premier port Ethernet à chacun des deuxièmes ports Ethernet en isolant les deuxièmes ports Ethernet entre eux. Cet agencement du dispositif de raccordement permet d'isoler les calculateurs entre eux et garantit de la sorte la sécurité informatique du système d'informations. Il ne s'agit donc pas là d'un simple routage de données entre les équipements mais du raccordement du premier équipement à chacun des deuxièmes équipements.

Avantageusement, le sélecteur comporte une position de déconnexion de tous les deuxièmes ports Ethernet.

Dans cette position, le sélecteur interdit toute transmission entre les équipements informatiques.

De préférence alors, l'unité de commande est programmée de telle manière que le sélecteur soit dans la position de déconnexion de tous les deuxièmes ports Ethernet lorsque l'unité de commande n'est pas alimentée.

Dans une application embarquée sur un aéronef, on peut prévoir que l'alimentation de l'unité de commande ne puisse être assurée que lorsque l'aéronef est au sol de sorte qu'il n'est pas possible de charger un programme dans un deuxième équipement lorsque l'aéronef est en vol.

Selon une autre caractéristique avantageuse, le dispositif comprend un port d'entrée d'un signal discret et, de préférence :
- le dispositif comporte au moins autant de ports de sortie du signal discret que de deuxièmes ports Ethernet et le sélecteur est agencé pour relier physiquement et de manière sélective le port d'entrée discret aux ports de sortie discrets, et/ou
- l'unité de commande est programmée de telle manière que le sélecteur soit dans une position de déconnexion de tous les deuxièmes ports Ethernet et/ou de tous les ports de sortie discrets lorsqu'aucun signal discret n'est présent sur le port d'entrée.

La présence du signal discret peut alors constituer une autorisation de transfert des données.

Avantageusement encore, le dispositif comprend un port de chaînage à au moins un dispositif de raccordement de même type et l'unité de commande est agencée pour transmettre à ce dernier une trame qui ne serait pas destinée aux deuxièmes équipements auxquels le dispositif de raccordement est raccordé.

Ceci permet de multiplier les deuxièmes équipements susceptibles d'être reliés au premier équipement.

L'invention a également pour objet un ensemble de traitement de données comportant au moins un tel dispositif de raccordement reliant des équipements informatiques.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique d'ensemble d'un système comportant des équipements informatiques reliés par des dispositifs de raccordement conformes à l'invention,

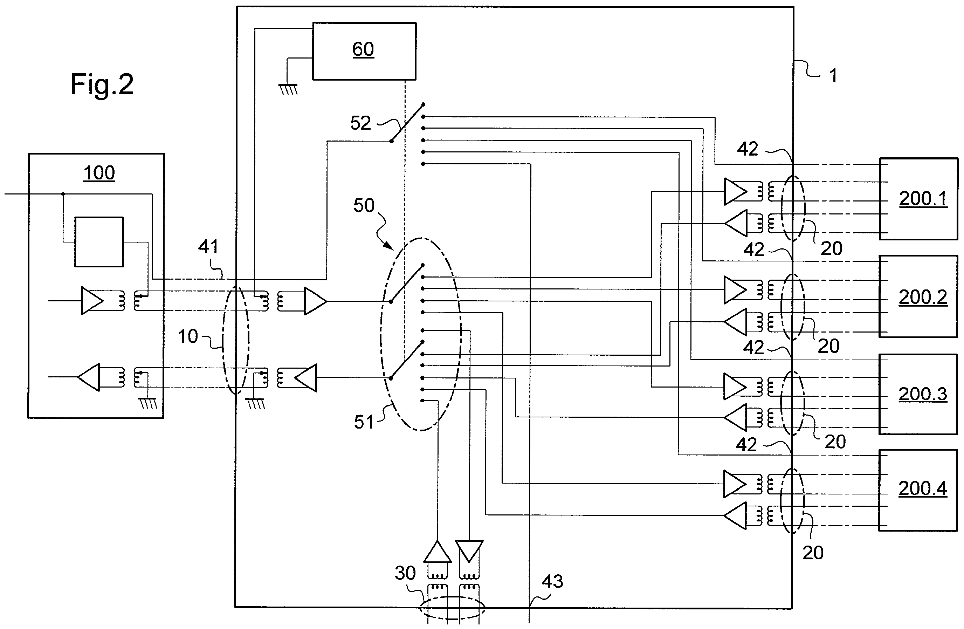

- la figure 2 est une vue schématique du dispositif de raccordement et sa liaison à une unité de chargement et déchargement.

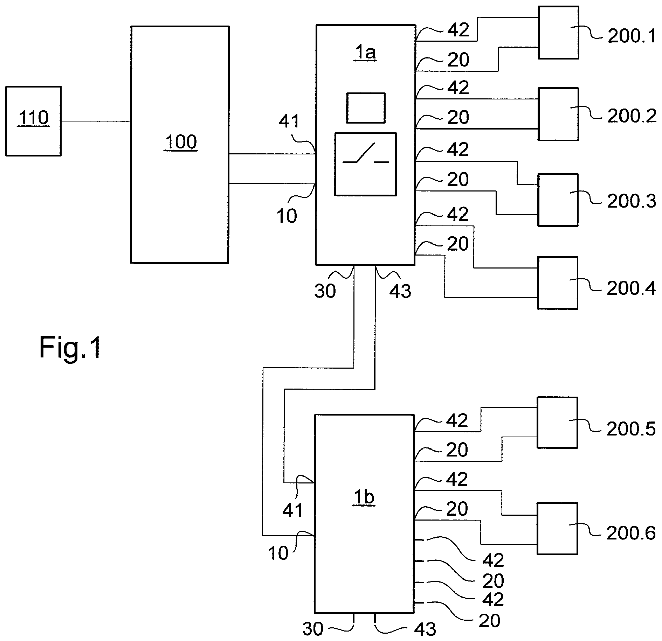

En référence aux figures, le dispositif de raccordement conforme à l'invention, généralement désigné en 1, est ici décrit dans une application aéronautique pour relier une unité de chargement et déchargement 100 à des calculateurs 200 (ici au nombre de six, individualisés au moyen des indices 1 à 6 annexés à la référence numérique 200 sur la figure 1) embarqués sur un aéronef. L'unité de chargement et déchargement 100 (ou « data loader »), servant d'interface opérateur et formant un premier équipement informatique, et les calculateurs 200, formant des deuxièmes équipements informatiques, sont connus en eux-mêmes et ne seront pas plus décrits ici.

Le dispositif de raccordement 1 comprend un premier port Ethernet 10 de raccordement à l'unité de chargement et déchargement 100 et des deuxièmes ports Ethernet 20 (ici au nombre de quatre) de raccordement à des calculateurs 200.

Le port Ethernet 10 est ici relié à l'unité de chargement et déchargement 100 par une liaison Ethernet bidirectionnelle (conforme à l'usage fait dans la norme ARINC 615 A) qui comprend ici de façon connue en elle-même une ligne montante et une ligne descendante qui sont isolées ici galvaniquement.

Chaque port Ethernet 20 est ici relié à un des calculateurs 200 par une liaison Ethernet bidirectionnelle (conforme à l'usage fait dans la norme ARINC 615 A) qui comprend ici de façon connue en elle-même une ligne montante et une ligne descendante qui sont isolées ici galvaniquement.

Chaque dispositif de raccordement 1 comprend un port Ethernet de chaînage 30 utilisable pour relier le dispositif de raccordement au port Ethernet 10 d'un autre dispositif de raccordement 1 via une liaison Ethernet bidirectionnelle du type précédemment mentionné.

Chaque dispositif de raccordement 1 comprend en outre un port d'entrée 41 d'un signal discret, autant de ports de sortie 42 du signal discret que de ports Ethernet 20 et un port de sortie 43 du signal discret pour chaînage avec un autre dispositif de raccordement 1. Les ports discrets 41, 42 et 43 sont destinés à être reliés respectivement à l'unité de chargement et déchargement 100, aux calculateurs 200 et à l'autre dispositif de raccordement 1.

Le dispositif de raccordement 1 comporte un sélecteur généralement désigné en 50 comportant un premier sélecteur 51 monté entre, d'une part, le port Ethernet 10 et, d'autre part, les ports Ethernet 20 et le port Ethernet de chaînage 30 pour relier physiquement et de manière sélective le port Ethernet 10 aux ports Ethernet 20 et au port Ethernet de chaînage 30. Le sélecteur 51 comporte ainsi autant de positions de connexion qu'il y a de ports Ethernet 20 et de port Ethernet de chaînage 30 pour pouvoir sélectivement connecter le port Ethernet 10 à l'un quelconque des ports Ethernet 20 ou au port Ethernet de chaînage 30. Le sélecteur 51 comporte en outre une position de déconnexion de tous les ports Ethernet 20 et du port Ethernet de chaînage 30 de sorte que le port Ethernet 10, les ports Ethernet 20 et le port Ethernet de chaînage 30 sont isolés les uns des autres.

Le sélecteur 50 comporte un deuxième sélecteur 52 qui est monté entre, d'une part, le port d'entrée 41 et, d'autre part, les ports discrets de sortie 42 et le port discret de sortie 43 et qui est agencé pour relier physiquement et de manière sélective le port discret d'entrée 41 à l'un quelconque des ports discrets de sortie 42 et au port discret de sortie 43. Le sélecteur 52 comporte ainsi autant de positions de connexion qu'il y a de ports discrets de sortie 42 et de port discret de sortie 43 et une position de déconnexion de tous les ports discrets de sortie 42 et du port discret de sortie 43 de sorte que le port discret d'entrée 41, les ports discrets de sortie 42 et le port discret de sortie 43 sont isolés les uns des autres.

Le sélecteur 50 est pourvu d'une unité de commande 60 des sélecteurs 51, 52 du sélecteur 50. L'unité de commande 60 est ici un circuit logique programmable programmé de telle manière que les sélecteurs 51, 52 du sélecteur 50 soient dans la position de déconnexion lorsque l'unité de commande 60 n'est pas alimentée et lorsqu'aucun signal discret n'est présent sur le port discret d'entrée 41.

L'alimentation est de préférence assurée via l'unité de chargement et déchargement 100 en transmettant de la puissance sur la ligne Ethernet raccordée au port Ethernet 10. Ce procédé d'alimentation d'un équipement relié à un réseau Ethernet est connu en lui-même. Ainsi, l'alimentation de l'unité de commande 60 n'est possible que lorsque l'unité de chargement et déchargement 100 est elle-même raccordée au dispositif de raccordement 1 et est alimentée.

Dans l'exemple décrit ici, le nombre de calculateurs 200 (six) est supérieur au nombre de ports Ethernet 20 (quatre) du dispositif de raccordement 1. Il est donc prévu d'utiliser un deuxième dispositif de raccordement 1 (les dispositifs de raccordement 1 sont de structures identiques et sont différenciés sur les figures au moyen des lettres a et b associées à la référence numérique 1).

Le dispositif de raccordement la a ainsi ses quatre ports Ethernet 20 et ses quatre ports discrets de sortie 42 reliés aux calculateurs 200.1, 200.2, 200.3, 200.4, son port Ethernet de chaînage 30 raccordé au port Ethernet 10 du deuxième dispositif de raccordement 1b et son port de sortie discret 43 relié au port d'entrée discret 41 du deuxième dispositif de raccordement 1b. Le dispositif de raccordement 1b a deux de ses ports Ethernet 20 reliés respectivement aux calculateurs 200.5, 200.6 et les deux ports de sortie discrets 42 reliés respectivement aux calculateurs 200.5, 200.6. Les deux autres ports Ethernet 20 et les deux autres ports de sortie discrets 42 du dispositif de raccordement 1b, de même que le port Ethernet de chaînage 30 et le port de sortie discret 43, ne sont pas connectés.

En fonctionnement, l'opérateur qui désire charger ou décharger des données dans un des calculateurs doit raccorder l'unité de chargement et déchargement 100 au dispositif de raccordement la, à une source d'alimentation et au capteur vol/sol (ou « air/ground ») 110 de l'aéronef. Le dispositif de raccordement la est alors alimenté en énergie électrique.

Les données sont transmises à un calculateur en émettant au préalable une trame de commande de commutation mentionnant un identifiant M (qui vaut 1, 2, 3, 4...) correspondant au calculateur en question.

Si une trame de données arrive au dispositif de raccordement la à destination du calculateur 200.M :
- si M est inférieur à N (représentant le nombre de ports Ethernet 20 du dispositif de raccordement la), l'unité de commande 60 commande le sélecteur 50 pour relier le port Ethernet 10 au port Ethernet 20 n°M auquel le calculateur 200.M est relié de manière à envoyer la trame de données vers ce calculateur ;
- si M est supérieur à N, l'unité de commande 60 du dispositif de raccordement la envoie une trame de données avec un identifiant corrigé M-N au dispositif de raccordement 1b en commandant le sélecteur 50 pour relier le port Ethernet 10 au port Ethernet de chaînage 30 et le port d'entrée discret 41 au port de sortie discret 43. L'unité de commande 60 du dispositif de raccordement 1b est alors alimentée et commande le sélecteur 50 pour relier le port Ethernet 10 au port Ethernet 20 n°M-N auquel est raccordé le calculateur 200.M de manière à lui envoyer les données.

Ainsi, de manière plus détaillée, dans l'hypothèse où le chargement des données concerne le calculateur 200.2, l'opérateur émet via le dispositif de chargement et déchargement 100 une trame UDP de commutation contenant le numéro du port Ethernet 20 à connecter, soit ici le port Ethernet 20 n°2. A sa réception, l'unité de commande 60 du dispositif de raccordement la vérifie que le numéro du port est inférieur au nombre de ports Ethernet 20 qu'il possède. Si tel est le cas, l'unité de commande 60 commande alors les sélecteurs 51, 52 dans la position correspondante. Le calculateur 200.2 est alors prêt au chargement de données.

Le dispositif de chargement et déchargement 100 émet une nouvelle trame UDP contenant une demande de statut à l'unité de commande 60 qui répond à cette demande en renvoyant le numéro du port Ethernet 20 connecté via le sélecteur 51.

Si la réponse de l'unité de commande 60 est conforme à ce qui est attendu, le dispositif de chargement et déchargement 100 émet les trames de données à charger.

Il est ainsi procédé pour chaque calculateur dans lequel des données doivent être chargées. Il en est de même pour les calculateurs desquels des données doivent être déchargées.

Dans l'hypothèse où le chargement des données concerne le calculateur 200.5, l'opérateur émet via le dispositif de chargement et déchargement 100 une trame UDP contenant le numéro du port Ethernet 20 à connecter, soit ici le port Ethernet 20 n°5 dans l'architecture globale du système de raccordement. A sa réception, l'unité de commande 60 du dispositif de raccordement la vérifie que le numéro du port Ethernet 20 est inférieur au nombre de ports Ethernet 20 qu'il possède. Si tel n'est pas le cas, l'unité de commande 60 soustrait le nombre total de ports Ethernet 20 du dispositif la au numéro contenu dans la trame et élabore une trame UDP de commande de commutation dans laquelle il introduit le résultat de cette soustraction, ici 1. L'unité de commande 60 commande alors les sélecteurs 51, 52 de manière à connecter le port Ethernet de chaînage 30 et le port de sortie discret 43 et transmet la trame UDP au dispositif de raccordement 1b.

L'unité de commande 60 du dispositif de raccordement 1b fonctionne de la même manière que le dispositif de raccordement la.

Il est ensuite procédé à une vérification de statut comme précédemment. La trame de statut renvoyée par l'unité de commande 60 du dispositif de raccordement 1b contient le numéro du port Ethernet 20 connecté via le sélecteur 50 et est transmise au dispositif de raccordement la. L'unité de commande 60 du dispositif de raccordement la élabore une trame de statut dans laquelle elle introduit comme numéro de port Ethernet 20 connecté la somme du numéro transmis par le dispositif de raccordement 1b et du nombre de ports Ethernet 20 du dispositif de raccordement la. Si la trame de statut est conforme à ce qui est attendu, le dispositif de chargement et déchargement 100 émet les trames de données à charger.

Bien entendu, l'invention n'est pas limitée au mode de réalisation décrit mais englobe toute variante entrant dans le champ de l'invention telle que définie par les revendications.

En particulier, bien que le dispositif de raccordement 1 décrit ne puisse ici être raccordé qu'à quatre calculateurs 200, il va de soi que le dispositif de raccordement 1 peut être agencé pour pouvoir être raccordé à un nombre différent de calculateurs 200.

Il est possible d'utiliser un seul dispositif de raccordement ou plusieurs dispositifs de raccordement reliés en cascade, le nombre de dispositifs de raccordement pouvant être égal à un, deux ou plus.

Les ports d'entrée et de sortie du signal discret sont facultatifs en particulier dans les applications non aéronautiques.

Le circuit logique programmable de l'unité de commande 60 peut être remplacé par tout moyen équivalent et notamment des composants discrets, un microcontrôleur ou autre.

L'autorisation ou l'interdiction du chargement et du déchargement de données peut être associée à une activation d'un autre type de détecteur ou à l'actionnement manuel d'un bouton dédié à cet effet. L'autorisation ou l'interdiction du chargement et du déchargement de données a été prévue en liaison avec l'activation ou la désactivation du capteur 110 : il peut être prévu un moyen permettant de forcer l'autorisation par exemple en cas d'opérations de maintenance particulières.

Il est possible d'alimenter en permanence tout ou partie des dispositifs de raccordement soit directement soit via l'unité de chargement et déchargement 100. L'alimentation permanente des dispositifs de raccordement est intéressante en ce qu'elle autorise la réalisation périodique de diagnostics de bon fonctionnement en dehors d'une sélection et / ou d'un chargement ou déchargement de données à venir.

Il est possible de prévoir deux entrées de signaux discrets sur les dispositifs de raccordement. Sur l'une de ces entrées arrive directement le signal discret en provenance de l'unité de chargement et déchargement 100 et sur l'autre de ces entrées arrive le signal discret provenant d'un dispositif de raccordement amont. La sélection d'un port d'un dispositif de raccordement n'est alors possible que si le signal discret est présent sur les deux entrées dudit dispositif de raccordement (pour le dispositif de raccordement le plus en amont, les deux entrées sont reliées directement à l'unité de chargement et déchargement).

L'invention est applicable à tout type de bus numérique et notamment de type AFDX et toute autre déclinaison d'Ethernet.

L'invention s'applique également à tout débit (par exemple gigabit) et tout support (par exemple fibre optique) d'Ethernet.

## Revendications

1. Dispositif (1) de raccordement sélectif d'au moins un premier équipement informatique (100) à une pluralité de deuxièmes équipements informatiques (200), comprenant un premier port Ethernet (10) de raccordement au premier équipement, des deuxièmes ports Ethernet (20) de raccordement à chacun des deuxièmes équipements, un sélecteur (50) agencé pour relier physiquement et de manière sélective le premier port Ethernet aux deuxièmes ports Ethernet, et une unité de commande du sélecteur (60), les deuxièmes ports Ethernet (20) étant isolés les uns des autres.

2. Dispositif selon la revendication 1, dans lequel le sélecteur (50) comporte une position de déconnexion de tous les deuxièmes ports Ethernet (20).

3. Dispositif selon la revendication 2, dans lequel l'unité de commande (60) est programmée de telle manière que le sélecteur (50) soit dans la position de déconnexion de tous les deuxièmes ports Ethernet (20) lorsque l'unité de commande n'est pas alimentée.

4. Dispositif selon la revendication 1, comprenant un port d'entrée (41) d'un signal discret.

5. Dispositif selon la revendication 4, comprenant au moins autant de ports de sortie (42) du signal discret que de deuxièmes ports Ethernet (20) et le sélecteur (50) est agencé pour relier physiquement et de manière sélective le port d'entrée discret (41) aux ports de sortie discrets.

6. Dispositif selon la revendication 4, dans lequel l'unité de commande (60) est programmée de telle manière que le sélecteur (50) soit dans une position de déconnexion de tous les ports de sortie discrets (42) lorsqu'aucun signal discret n'est présent sur le port d'entrée (41).

7. Dispositif selon la revendication 4, comprenant un port de sortie discret (43) de chaînage à au moins un dispositif de raccordement (1) de même type et l'unité de commande (60) est agencée pour transmettre à ce dernier une trame qui ne serait pas destinée aux deuxièmes équipements (200) auxquels le dispositif de raccordement (1) est raccordé.

8. Dispositif selon la revendication 1, comprenant un port Ethernet (30) de chaînage à au moins un dispositif de raccordement de même type et l'unité de commande (60) est agencée pour transmettre à ce dernier une trame qui ne serait pas destinée aux deuxièmes équipements (200) auxquels le dispositif de raccordement (1) est raccordé.

9. Ensemble de traitement de données comprenant des équipements (100) reliés à au moins un dispositif de raccordement (1) selon l'une quelconque des revendications précédentes.

## Patentansprüche

1. Vorrichtung (1) zur selektiven Verbindung mindestens einer ersten Computerausrüstung (100) mit einer Vielzahl von zweiten Computerausrüstungen (200), umfassend einen ersten Ethernet-Port (10) zur Verbindung mit der ersten Ausrüstung, zweite Ethernet-Ports (20) zur Verbindung mit jeder der zweiten Ausrüstungen, einen Selektor (50), der ausgebildet ist, um den ersten Ethernet-Port physisch und auf selektive Weise mit den zweiten Ethernet-Ports zu verbinden, und eine Steuereinheit (60) zum Steuern des Selektors, wobei die zweiten Ethernet-Ports (20) voneinander isoliert sind.

2. Vorrichtung nach Anspruch 1, bei der der Selektor (50) eine Position zum Trennen aller zweiten Ethernet-Ports (20) umfasst.

3. Vorrichtung nach Anspruch 2, bei der die Steuereinheit (60) derart programmiert ist, dass der Selektor (50) in der Position zum Trennen aller zweiten Ethernet-Ports (20) ist, wenn die Steuereinheit nicht gespeist wird.

4. Vorrichtung nach Anspruch 1, umfassend einen Eingangsport (41) für ein diskretes Signal.

5. Vorrichtung nach Anspruch 4, umfassend mindestens so viele Ausgangsports (42) für das diskrete Signal wie zweite Ethernet-Ports (20) und wobei der Selektor (50) ausgebildet ist, um den diskreten Eingangsport (41) physisch und auf selektive Weise mit den diskreten Ausgangsports zu verbinden.

6. Vorrichtung nach Anspruch 4, bei der die Steuereinheit (60) derart programmiert ist, dass der Selektor (50) in einer Position zum Trennen aller diskreten Ausgangsports (42) ist, wenn kein diskretes Signal an dem Eingangsport (41) vorhanden ist.

7. Vorrichtung nach Anspruch 4, umfassend einen diskreten Chaining-Ausgangsport (43) zur Verkettung mit mindestes einer Verbindungsvorrichtung (1) gleicher Art und wobei die Steuereinheit (60) ausgebildet ist, um an diese letztgenannte einen Rahmen zu übertragen, der nicht für die zweiten Ausrüstungen (200) bestimmt ist, mit denen die Verbindungsvorrichtung (1) verbunden ist.

8. Vorrichtung nach Anspruch 1, umfassend einen Chaining-Ethernet-Port (30) zur Verkettung mit mindestens einer Verbindungsvorrichtung gleicher Art und wobei die Steuereinheit (60) ausgebildet ist, um an diese letztgenannte einen Rahmen zu übertragen, der nicht für die zweiten Ausrüstungen (200) bestimmt ist, mit denen die Verbindungsvorrichtung (1) verbunden ist.

9. Datenverarbeitungsanlage, umfassend Ausrüstungen (100), die mit mindestens einer Verbindungsvorrichtung (1) nach einem der vorhergehenden Ansprüche verbunden sind.

## Claims

1. A device (1) for selective connection of at least one first piece of computer equipment (100) to a plurality of second pieces of computer equipment (200), the device comprising a first Ethernet port (10) for connection to the first equipment, second Ethernet ports (20) for connection to each of the second pieces of equipment, a selector (50) arranged to connect the first Ethernet port physically and in selective manner to the second Ethernet ports, and a selector control unit (60), the second Ethernet ports (20) being isolated from one another.

2. A device according to claim 1, wherein the selector (50) has a disconnection position in which all of the second Ethernet ports (20) are disconnected.

3. A device according to claim 2, wherein the control unit (60) is programmed in such a manner that the selector (50) is in the position for disconnecting all of the second Ethernet ports (20) when the control unit is not powered.

4. A device according to claim 1, including a discrete signal inlet port (41) .

5. A device according to claim 4, including at least as many discrete signal outlet ports (42) as there are second Ethernet ports (20), and the selector (50) is arranged to connect the discrete inlet port (41) physically and in selective manner to the discrete outlet ports.

6. A device according to claim 4, wherein the control unit (60) is programmed in such a manner that the selector (50) is in a position for disconnecting all of the discrete outlet ports (42) when no discrete signal is present on the inlet port (41).

7. A device according to claim 4, including a discrete chaining outlet (43) for chaining to at least one connection device (1) of the same type, and the control unit (60) is arranged to transmit thereto any frame that is not addressed to the second pieces of equipment (200) to which the connection device (1) is connected.

8. A device according to claim 1, including a chaining Ehernet port (30) for chaining to at least one connection device of the same type, and the control unit (60) is arranged to transmit thereto any frame that is not addressed to the second pieces of equipment (200) to which the connection device (1) is connected.

9. A data processing assembly comprising pieces of equipment (100) connected to at least one connection device (1) according to any preceding claim.
